# EUROPÄISCHE PATENTSCHRIFT

(11) **EP 2 971 387 B1**
(45) Veröffentlichungstag und Bekanntmachung des Hinweises auf die Patenterteilung: **19.04.2017**
(21) Anmeldenummer: 14709555.8
(22) Anmeldetag: 10.03.2014
(51) Int. Cl.: E03D 9/08, E03C 1/04, E03C 1/06, F16K 31/38

(54) **HANDBRAUSE-HALTEEINRICHTUNG**
HAND-HELD SHOWER HOLDING DEVICE
DISPOSITIF SUPPORT DE DOUCHETTE

(30) Priorität: 11.03.2013 DE 202013002280 U
(43) Veröffentlichungstag der Anmeldung: 20.01.2016
(73) Patentinhaber: Neoperl GmbH, 79379 Müllheim (DE)
(72) Erfinder: HAUTH, Matthias, 79674 Todtnau/Muggenbrunn (DE)
(74) Vertreter: Börjes-Pestalozza, Henrich
(86) Internationale Anmeldenummer: PCT/EP2014/000610
(87) Internationale Veröffentlichungsnummer: WO 2014/139661

(56) Entgegenhaltungen:
- EP-A1- 1 548 344
- FR-A- 1 216 187
- US-A- 2 364 491

## Beschreibung

Die Erfindung betrifft eine Handbrause-Halteeinrichtung, die ein Schaltelement mit einem Betätigungsarm hat, der an einem ersten Armende einen Handbrausehalter trägt, und mit einer Handbrause, die im Handbrausehalter ablegbar ist, wobei der Handbrausehalter unter der Last der in ihm abgelegten Handbrause von einer ersten Betätigungsstellung in eine zweite Betätigungsstellung verschwenkbar ist, wobei das Schaltelement ein Sperrventil hat, welches einem, zu der Handbrause führenden Flüssigkeitsauslass der Handbrause-Halteeinrichtung in Strömungsrichtung vorgeschaltet ist und eine Durchflussöffnung aufweist, welche einen Ventilsitz umgrenzt, der in einer Schließstellung des Sperrventils von einem Ventilverschluss verschlossen ist, und wobei der Betätigungsarm zur Betätigung des Sperrventiles vorgesehen ist.

Man kennt bereits Handbrause-Halteeinrichtungen, die als Ersatz für ein Bidet im Bereich einer Toilette angeordnet und verwendet werden. Die vorbekannten Handbrause-Halteeinrichtungen dienen zur Bereitstellung einer Handbrause, die über eine flexible Schlauchleitung mit dem Wasserversorgungsnetz verbunden ist. In die Handbrause ist ein manuell betätigbares Brause- oder Entnahmeventil integriert, das zur Wasserentnahme öffenbar und anschließend wieder schließbar ist. Der Armaturenkorpus, der meist neben einer Toilettenschüssel an der Wand befestigt ist, weist einen gabelförmigen Handbrausehalter auf, durch dessen Gabelöffnung die flexible Schlauchleitung derart eingefädelt werden kann, dass anschließend die Handbrause in einer Bereitschaftsstellung im Handbrausehalter eingesetzt und bis zum nächsten Einsatz abgelegt werden kann.

Bei solchen Handbrausen, die über eine flexible Schlauchleitung mit dem Wasserzulauf verbunden sind, besteht jedoch die Gefahr, dass die Handbrause in Schmutzwasser eingetaucht wird und dass anschließend bei entsprechenden Druckverhältnissen solches Schmutzwasser über die Handbrause und die flexible Schlauchleitung in das Trinkwasserversorgungsnetz gelangt. Um dieser Gefahr zu begegnen, ist es bereits bekannt, solchen Handbrausen zuströmseitig eine Rücklaufsperre vorzuschalten, die ein Ansaugen von Schmutzwasser über die Handbrause entgegen der üblichen Durchströmrichtung verhindert und die beispielsweise als Rückschlagventil ausgestaltet sein kann.

Selbst bei derart verbesserten Ausführungen besteht die Gefahr, dass es zu Undichtigkeiten insbesondere im Bereich der bruchgefährdeten flexiblen Schlauchleitung kommen und das zuströmende Wasser anschließend ungehindert ausströmen kann, insbesondere wenn ein in die Auslaufarmatur integriertes Zulaufventil nicht geschlossen wird.

Aus der US 2 364 491 A ist bereits eine Handbrause-Halteeinrichtung der eingangs erwähnten Art vorbekannt, die ein Schaltelement mit einem Betätigungsarm hat, der an einem ersten Armende einen Handbrausehalter trägt, in den eine Handbrause ablegbar ist, und der unter der Last der im Handbrausehalter abgelegten Handbrause von einer ersten Betätigungsstellung in eine zweite Betätigungsstellung verschwenkbar ist. Das Schaltelement der vorbekannten Handbrause-Halteeinrichtung weist ein Sperrventil auf, welches einem, zu der Handbrause führenden Flüssigkeitsauslass in Strömungsrichtung vorgeschaltet ist und eine Durchflussöffnung hat, welche einen Ventilsitz umgrenzt, der in einer Schließstellung des Sperrventils von einem Ventilverschluss verschlossen ist, wobei der Betätigungsarm zur Betätigung des Sperrventiles vorgesehen ist.

In der aus US 2 364 491 A vorbekannten Handbrause-Halteeinrichtung stellt das Sperrventil ein direkt schaltendes Ventil dar, das allein durch das Gewicht der in den Handbrausehalter eingelegten Handbrause von seiner Offenstellung in die Schließstellung gebracht wird. Das Gewicht insbesondere einer aus Kunststoff hergestellten und entsprechend leichten Handbrause ist insbesondere bei hohen Drücken des zur Handbrause-Halteeinrichtung strömenden Wassers jedoch kaum ausreichend, um das Sperrventil in seiner Schließstellung dicht zu halten. Vielmehr sind zwischen dem Ventilsitz und dem Ventilverschluss geringe Leckageströme zu erwarten, die auch durch ein hohes Pfeifgeräusch akustisch störend wahrnehmbar sein können.

Aus der FR 1 216 187 A und:der EP 1 548 344 A1 kennt man bereits verschiedene Ausführungen eines Umschaltventiles, das in einer sanitären Mischarmatur verwendbar ist, in der bei Bedarf heißes und kaltes Wasser gemischt werden sollen, um das aus der Armatur auslaufende Wasser mit der gewünschten Temperatur zu erhalten. Diese vorbekannten Umschaltventile sind im Vergleich zu einer Handbrause-Halteeinrichtung, bei der ein dem Flüssigkeitsauslass vorgeschaltetes Sperrventil in Abhängigkeit davon geschaltet wird, ob in einem Handbrausehalter eine Handbrause eingelegt ist, weniger gut vergleichbar.

Es besteht daher insbesondere die Aufgabe, eine sanitäre Handbrause-Halteeinrichtung der eingangs erwähnten Art zu schaffen, bei der eine Sicherheitsfunktion oder auch eine andere Funktion davon abhängig gemacht werden kann, ob die Handbrause im Handbrausehalter abgelegt wurde.

Die erfindungsgemäße Lösung dieser Aufgabe besteht bei der Handbrause-Halteeinrichtung der eingangs erwähnten Art insbesondere darin, dass im Ventilverschluss des Sperrventiles ein erster Flüssigkeitskanal vorgesehen ist, der die der Durchflussöffnung zugewandte erste Ventilseite mit einer auf der der Durchflussöffnung abgewandten zweiten Ventilseite angeordneten Kammer verbindet, dass im Schaltelement ein Betätigungsschieber vorgesehen ist, der in einem Schiebergehäuse in Schieber-Längsrichtung verschieblich geführt ist, und der in einer in Richtung zum Betätigungsarm vorgeschobenen Schiebeposition des Betätigungsschiebers wenigstens eine Auslassöffnung freigibt, welche die Kammer mit dem Flüssigkeitsauslass verbindet, dass der Betätigungsarm und der Betätigungsschieber durch das Schiebergehäuse hindurch magnetisch gekoppelt miteinander in Steuerverbindung stehen, und dass der vom Ventilsitz in Schließstellung des Sperrventiles umgrenzte Teilbereich der ersten Ventilseite im Vergleich zu der der Kammer zugewandten zweiten Ventilseite kleiner ist.

Die erfindungsgemäße Handbrause-Halteeinrichtung weist ein Schaltelement mit einem zur Betätigung des Schaltelementes bestimmten Betätigungsarm auf. Der Betätigungsarm, der an einem ersten Armende den Handbrausehalter trägt, ist unter der Last einer im Handbrausehalter abgelegten Handbrause von einer ersten Betätigungsstellung in eine zweite Betätigungsstellung verschwenkbar. Damit die erfindungsgemäße Handbrause-Halteeinrichtung eine höchstmögliche Betriebssicherheit bieten kann und damit mit Hilfe der erfindungsgemäßen Handbrause-Halteeinrichtung die durch Undichtigkeiten im Bereich der Schlauchleitung verursachten Schäden wirkungsvoll unterbunden werden können, ist erfindungsgemäß vorgesehen, dass das Schaltelement ein Sperrventil hat, welches einem zu der Handbrause führenden Flüssigkeitsauslass in Strömungsrichtung vorgeschaltet ist. Dieses Sperrventil weist eine Durchflussöffnung auf, welche einen Ventilsitz umgrenzt, der in einer Schließstellung des Sperrventils von einem Ventilverschluss verschlossen ist, wobei der Betätigungsarm zur Betätigung des Sperrventiles vorgesehen ist. Im Ventilverschluss des Sperrventiles ist ein erster Flüssigkeitskanal vorgesehen, der die der Durchflussöffnung zugewandte erste Ventilseite mit einer auf der der Durchflussöffnung abgewandten zweiten Ventilseite angeordneten Kammer verbindet, wobei im Schaltelement ein Betätigungsschieber in Schieber-Längsrichtung verschieblich geführt ist, der in einer in Richtung zum Betätigungsarm vorgeschobenen Schiebeposition des Betätigungsschiebers wenigstens eine Auslassöffnung freigibt, welche die Kammer mit dem Flüssigkeitsauslass verbindet, und wobei der vom Ventilsitz in Schiebestellung des Sperrventiles umgrenzte Teilbereich der ersten Ventilseite im Vergleich zu der der Kammer zugewandten zweiten Ventilseite kleiner ist. Das Sperrventil der erfindungsgemäßen Handbrause-Halteeinrichtung ist dem zur Handbrause führenden Flüssigkeitsauslass in Strömungsrichtung vorgeschaltet. In der Handbrause ist vorzugsweise ein manuell öffen- und schließbares Brauseventil vorgesehen. Die im Sperrventil der erfindungsgemäßen Handbrause-Halteeinrichtung vorgesehene Durchflussöffnung ist von einem Ventilsitz umgrenzt, der in einer Schließstellung des Sperrventils von dem Ventilverschluss verschlossen wird, so dass in dieser Schließstellung des Sperrventils ein unkontrolliertes Ausströmen des im Wasserversorgungsnetz befindlichen Wassers wirkungsvoll verhindert wird. Zur Betätigung des Sperrventils ist ein Betätigungsarm vorgesehen, der an seinem ersten Armende den Handbrausehalter trägt. Unter der Last einer in den Handbrausehalter bis zum nächsten Gebrauch abgelegten Handbrause kann der Betätigungsarm gegen eine Rückstellkraft verschwenken. Im Ventilverschluss des Sperrventils ist ein erster Flüssigkeitskanal vorgesehen, der die der Durchflussöffnung zugewandte erste Ventilseite mit einer auf der der Ventilöffnung abgewandten zweiten Ventilseite angeordneten Kammer verbindet. In der Handbrause-Halteeinrichtung ist ein Betätigungsschieber vorgesehen, der in Schieber-Längsrichtung verschieblich geführt ist und dessen dem Betätigungsarm zugewandtes Schieber-Ende an einer, am zweiten Armende des Betätigungsarmes vorgesehenen Schaltnocke in Steuerverbindung anliegt. In einer in Richtung zum Betätigungsarm vorgeschobenen Schiebeposition des Betätigungsschiebers gibt dieser wenigstens eine Auslassöffnung frei, welche die Kammer mit dem Flüssigkeitsauslass verbindet. Bei geöffnetem Sperrventil kann das Wasser somit in einem ersten Teilstrom durch die Durchflussöffnung direkt zum Flüssigkeitsauslass und in einem zweiten Teilstrom über den ersten Flüssigkeitskanal und die Kammer zu der wenigstens einen Auslassöffnung und von dort ebenfalls zum Flüssigkeitsauslass fließen. Bei geschlossenem Sperrventil unterbindet der auf dem Ventilsitz dicht aufliegende Ventilverschluss den ersten Teilstrom. Das vom Wasserversorgungsnetz kommende Wasser steht sowohl auf der ersten Ventilseite als auch - über den ersten Flüssigkeitskanal - auf der zweiten Ventilseite mit gleichem Druck an. Da der von der Durchflussöffnung in Schließstellung des Sperrventils umgrenzte Teilbereich der ersten Ventilseite im Vergleich zu der der Kammer zugewandten zweiten Ventilseite kleiner ist, wird der Ventilverschluss so lange dicht auf dem Ventilsitz gehalten, bis der in der Kammer anstehende Druck über die wenigstens eine, mittels dem Betätigungsschieber öffen- und schließbare Auslassöffnung abgebaut wird. Der Ventilverschluss wird somit auch hydraulisch dicht gegen den Ventilsitz gepresst, wenn der Betätigungsschieber die zumindest eine Auslassöffnung verschlossen hat. Da der Ventilverschluss selbst dann dicht auf dem Ventilsitz aufliegt, wenn im Bereich der zur Handbrause führenden Schlauchleitung eine Undichtigkeit auftritt, solange der Betätigungsarm den Schiebeweg des Betätigungsschiebers noch nicht in Richtung zum Beitätigungsarm freigegeben hat und der Betätigungsschieber den zum Flüssigkeitsauslass führenden Strömungsweg durch Öffnen der wenigstens einen Auslassöffnung nicht geöffnet hat, wird eine Leckage im Bereich der erfindungsgemäßen Handbrause-Halteeinrichtung wirkungsvoll vermieden. Um den Funktionsbereich des Betätigungsschiebers von dem Funktionsbereich des Betätigungsarmes trennen zu können und um gleichzeitig die Anzahl der erforderlichen Dichtungen zu begrenzen, ist erfindungsgemäß vorgesehen, dass der Betätigungsschieber in einem Schiebergehäuse verschieblich geführt ist, wobei der Betätigungsarm und der Betätigungsschieber durch das Schiebergehäuse hindurch magnetisch gekoppelt miteinander in Steuerverbindung stehen.

Damit das Schaltelement in Abhängigkeit davon, ob eine Handbrause in den Handbrausehalter abgelegt worden ist oder nicht, zwischen einer ersten und einer zweiten Betätigungsstellung schalten kann, ist es vorteilhaft, wenn der Betätigungsarm gegen die Rückstellkraft zumindest eines Rückstellelements in die zweite Betätigungsstellung verschwenkbar ist.

Das mit der erfindungsgemäßen Handbrause-Halteeinrichtung zusammenwirkende Schaltelement kann ein elektrisches, magnetisches, hydraulisches oder mechanisches Schaltelement oder eine Kombination hiervon sein.

Besonders vorteilhaft ist es, wenn das Schaltelement zur Freigabe des Durchflusses zur Handbrause bestimmt ist und insbesondere, wenn das Schaltelement in der ersten Betätigungsstellung des Betätigungsarmes den Durchfluss des Wassers zur Handbrause freigibt.

Um die Schwenkbewegung am Betätigungsarm in eine Schaltbewegung am Betätigungsschieber umsetzen zu können, ist es vorteilhaft, wenn der Betätigungsschieber mit seinem dem Betätigungsarm zugewandten Schieber-Ende an einer am zweiten am Ende des Betätigungsarmes vorgesehenen Schaltnocke in Steuerverbindung anliegt.

Dabei kann das Schiebergehäuse den Betätigungsschieber dicht umschließen. Vorteilhaft ist es, wenn dabei das Schiebergehäuse außenumfangsseitig von zumindest einem Haltering umgriffen ist, wenn am Haltering oder am Betätigungsschieber wenigstens ein Dauermagnet vorgesehen ist, der mit einem ferromagnetischen Gegenstück am jeweils anderen Bauteil zusammenwirkt, und wenn eine Schwenkbewegung am Betätigungsarm in eine Schiebebewegung des auf dem Schiebergehäuse verschieblich geführten Halteringes umsetzbar ist.

Damit das Sperrventil im Bereich seines Ventilsitzes in Schließstellung gut abdichten kann, ist eine Dichtung vorgesehen, die in Schließstellung des Sperrventils zwischen Ventilverschluss und Ventilsitz angeordnet ist.

Dabei wird eine Ausführungsform bevorzugt, bei der die Dichtung aus elastischem Material hergestellt ist.

Eine bevorzugte Weiterbildung gemäß der Erfindung sieht vor, dass der Ventilverschluss eine Ventilverschluss-Membrane aufweist, die die erste Ventilseite von der zweiten Ventilseite trennt. Diese Ventilverschluss-Membrane kann mit ihrem äußeren Membranumfang am Innenumfang eines Ventilgehäuses dicht gehalten sein.

Vorteilhaft ist es, wenn die Ventilverschluss-Membrane als Ringscheibe ausgebildet ist, deren innere und vorzugsweise am
Ventilverschluss anliegende Ringzone als Dichtung ausgestaltet ist und deren äußere Ringzone am Gehäuseinnenumfang des Sperrventil-Gehäuses gehalten ist. Bei dieser Ausführungsform kann der durch den geöffneten Ventilsitz des Sperrventils zum Flüssigkeitsauslass führende Flüssigkeitsstrom einerseits und der durch den ersten Flüssigkeitskanal und die Kammer über die wenigstens eine Auslassöffnung führende Strömungsweg andererseits dicht und wartungsarm voneinander getrennt werden.

Eine bevorzugte Ausführungsform gemäß der Erfindung sieht vor, dass die äußere Ringzone der als Ringscheibe ausgestalteten Ventilverschluss-Membrane zwischen zwei Gehäuseteilen des Sperrventil-Gehäuses umlaufend dicht eingespannt ist.

Um die der Durchflussöffnung zugewandte erste Ventilseite mit der auf der der Durchflussöffnung abgewandten zweiten Ventilseite angeordneten Kammer zu verbinden, ist es vorteilhaft, wenn der im Ventilverschluss vorgesehene erste Flüssigkeitskanal als zentraler Flüssigkeitskanal ausgebildet oder in der Ventilverschluss-Membrane des Ventilverschlusses vorgesehen ist.

Damit der Ventilverschluss den Ventilsitz in Schließstellung des Sperrventils gut abdichten kann, ist es vorteilhaft, wenn der Ventilverschluss einen den Ventilsitz in Schließstellung beaufschlagenden Ventilteller hat.

Ein Ausführungsbeispiel der erfindungsgemäßen Handbrause-Halteeinrichtung sieht vor, dass die Auslassöffnung als eine in einer Kammerwand angeordnete Durchflussöffnung ausgestaltet ist, und dass der Betätigungsschieber in einer in die dem Betätigungsarm abgewandte Schieberichtung zurückgeschobenen Schiebeposition die Auslassöffnung dicht verschließt. Da der Betätigungsschieber in einer, in die dem Betätigungsarm abgewandte Schieberichtung zurückgeschobenen Schiebeposition dicht auf der Auslassöffnung aufliegt, werden die durch eine Schiebebewegung verursachten und auf eventuelle Ringdichtungen einwirkenden Reibkräfte reduziert, was der Funktionssicherheit des in der erfindungsgemäßen Handbrause-Halteeinrichtung vorgesehenen Sperrventils zu Gute kommt.

Demgegenüber sieht ein anderes Ausführungsbeispiel gemäß der Erfindung vor, dass im Betätigungsschieber ein zweiter Flüssigkeitskanal vorgesehen ist, der wenigstens eine im Bereich der Kammer angeordnete Einlassöffnung sowie die mindestens eine Auslassöffnung hat, welche in einer in Richtung zum Betätigungsarm vorgeschobenen Schiebeposition des Betätigungsschiebers den ersten Flüssigkeitskanal über den zweiten Flüssigkeitskanal mit dem Flüssigkeitsauslass verbindet.

Gemäß einem Ausführungsbeispiel der Erfindung ist vorgesehen, dass der Betätigungsschieber stangenförmig ausgestaltet ist und an der der Kammer zugewandten Stirnseite die wenigstens eine Einlassöffnung hat und dass am Betätigungsschieber umfangsseitig die zumindest eine Auslassöffnung vorgesehen ist.

Demgegenüber sieht ein anderes Ausführungsbeispiel gemäß der Erfindung vor, dass der Betätigungsschieber zumindest zweiteilig ausgebildet ist und zwei getrennt voneinander verschieblich geführte Schieberteile hat, dass das der Kammer zugewandte erste Schieberteil stirnseitig die Einlassöffnung des das erste Schieberteil durchsetzenden zweiten Flüssigkeitskanals aufweist, dass das der Kammer abgewandte zweite Schieberteil mit seiner dem ersten Schieberteil zugewandten Stirnseite in Schließstellung des Sperrventils den zweiten Flüssigkeitskanal dicht verschließt und dass in einer in Richtung zur Schaltnocke vorgeschobenen Schiebeposition des zweiten Schieberteiles des Betätigungsschiebers die Schieberteile unter Bildung eines als Auslassöffnung vorgesehenen Spaltes voneinander beabstandet sind.

Damit der Betätigungsarm bei Entnahme der Handbrause von der Handbrausehalterung in eine oben liegende Schwenkposition verschwenken kann, ist es vorteilhaft, wenn der Betätigungsamr gegen die Rückstellkraft zumindest eines Rückstellelements in die zweite Betätigungsstellung verschwenkbar ist.

Dabei sieht eine konstruktiv einfache und leicht herstellbare Ausführungsform gemäß der Erfindung vor, dass das Rückstellelement als Federzunge ausgebildet ist, welche Federzunge mit einem freien Zungenendbereich den Betätigungsarm beaufschlagt.

Um die auf dem Betätigungsarm ausgeübte Rückstellkraft verändern und an das Gewicht der Handbrause anpassen zu können, ist es vorteilhaft, wenn die Federzunge auf ihrer dem Betätigungsarm abgewandten Federzungen-Seite von einer Stellschraube beaufschlagt ist, und wenn mittels der Stellschraube die Vorspannung der Federzunge veränderbar ist.

Nach einem anderen vorteilhaften Ausführungsbeispiel gemäß der Erfindung kann zusätzlich oder stattdessen vorgesehen sein, dass das auf den Betätigungsarm einwirkende, zumindest eine Rückstellelement als Schenkelfeder oder dergleichen Federelement ausgebildet ist. Diese Schenkelfeder kann beispielsweise seitlich vom Betätigungsarm angeordnet und auf dessen Schwenkachse aufgeschoben sein.

Für eine sichere Funktion des Betätigungsarmes kann es zweckmäßig sein, wenn das zumindest eine Federelement mit einer Vorspannung auf den Betätigungsarm einwirkt und wenn die auf dem Betätigungsarm einwirkende Vorspannung des zumindest einen Federelementes vorzugsweise veränderbar ist. Da die auf den Betätigungsarm einwirkende Vorspannung des zumindest einen Federelementes veränderbar sein kann, ist es möglich, die Vorspannung des Federelementes und damit auch dessen auf den Betätigungsarm einwirkende Rückstellkraft an: das Gewicht der jeweils verwendeten Handbrause anzupassen.

Eine bevorzugte Ausführungsform gemäß der Erfindung sieht vor, dass am Betätigungselement seitlich mehrere, vorzugsweise auf einer Kreisbahn um die Schwenkachse angeordnete Angriffsstellen vorgesehen sind, an denen das zumindest eine Federelement wahlweise angreift.

An sich sollte der von der Kammer aus auf den Betätigungsschieber in Richtung zum Betätigungsarm einwirkende Druck ausreichend sein, um den Betätigungsschieber in Richtung zur Schaltnocke zu verschieben. Sollten jedoch die durch Ringdichtungen im Bereich des Betätigungsschiebers ausgeübten Kräfte zu groß sein, ist es möglich, die in Richtung zum Betätigungsarm orientierte Schiebebewegung des Betätigungsschiebers durch eine Rückstellkraft zu unterstützen. Eine Ausführungsform gemäß der Erfindung sieht daher vor, dass der Betätigungsschieber von einer zum Betätigungsarm vorgeschobenen Schiebeposition gegen eine Rückstellkraft in eine in die dem Betätigungsarm abgewandte Richtung zurückgeschobene Schiebeposition verschieblich geführt ist.

Weiterbildungen gemäß der Erfindung ergeben sich aus den Ansprüchen in Verbindung mit der Zeichnung sowie der nachstehenden Figurenbeschreibung.

Es zeigt :

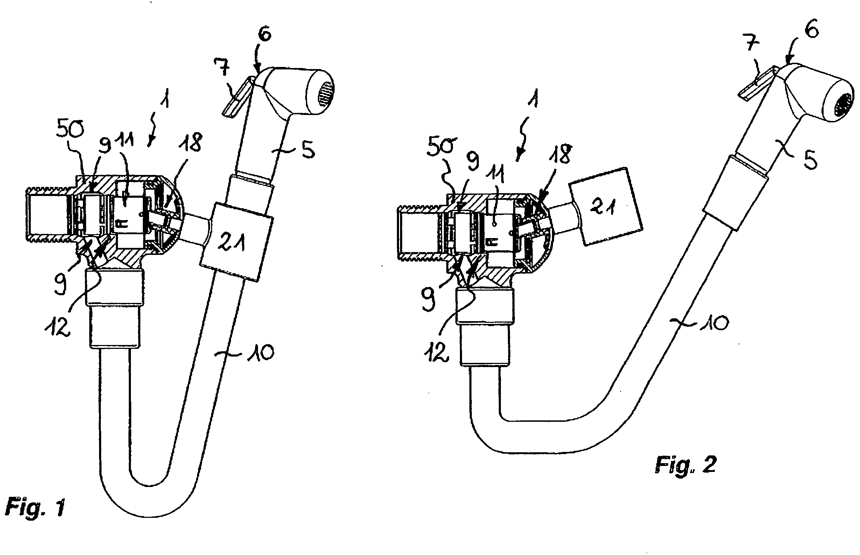

- Fig. 1: eine in ein Eckventil integrierte und hier im Längsschnitt dargestellte Handbrause-Halteeinrichtung, die einen zur Betätigung eines Schaltelementes bestimmten Betätigungsarm umfasst, der an seinem einen Armende einen Handbrausehalter trägt, in den eine beispielsweise als Unterdusche verwendbare oder als sogenannte "Shattaf Shower" bezeichnete Handbrause abgelegt werden kann, welche Handbrause über eine flexible Schlauchleitung mit der als Eckventil ausgestalteten HandbrauseHalteeinrichtung verbunden ist, wobei die Handbrause hier in der Bereitschaftsstellung gezeigt ist, in der die Handbrause im Handbrausehalter zur Anwendung bereitsteht,
- Fig. 2: die Handbrause-Halteeinrichtung aus Figur 1 in einer Gebrauchsstellung der Handbrause, in welcher die Handbrause aus dem Handbrausehalter entnommen wurde,
- Fig. 3: das Schaltelement der Handbrause-Halteeinrichtung aus Figur 1 und 2 in einer perspektivischen Ansicht,
- Fig. 4: das für die Handbrause-Halteeinrichtung gemäß den Figuren 1 und 2 bestimmte Schaltelement aus Figur 3 in einer gegenüber der Fig. 3 veränderten Perspektivansicht, wobei ein auf das Schaltelement stirnseitig aufsetzbarer Deckel entfernt wurde,
- Fig. 5: ein weiteres längsgeschnittenes Schaltelement in der Schließstellung seines Sperrventils, wobei eine Schwenkbewegung am Betätigungsarm der Handbrause-Halteeinrichtung magnetisch gekoppelt auf das Schaltelement übertragbar ist,
- Fig. 6: das Schaltelement aus Figur 30 in der Offenstellung seines Sperrventils,
- Fig. 7: das Schaltelement aus den Figuren 5 und 6 in einem gegenüber Figur 10 um 90° gedrehten Längsschnitt,
- Fig. 8: das hier in ein Eckventil integrierte Schaltelement aus den Figuren 5 bis 7 mit dem hier in der Schließstellung befindlichen und zur Aufnahme einer nicht weiter gezeigten Handbrause bestimmten Handbrausehalter,
- Fig. 9: das mit dem Schaltelement aus den Figuren 5 bis 8 ausgestattete Eckventil mit dem hier in der unbelasteten Offenstellung befindlichen Handbrausehalter,
- Fig. 10: das Schaltelement aus den Figuren 5 bis 9 in einer auseinandergezogenen Einzelteildarstellung,
- Fig. 11: ein weiteres längsgeschnittenes Schaltelement in der Schließstellung seines Sperrventils, bei dem eine Schwenkbewegung am Betätigungsarm der Handbrause-Halteeinrichtung magnetisch gekoppelt auf das Schaltelement übertragbar ist, auf welches Schaltelement ein Rückstellelement einwirkt, welches das Schaltelement zurück in seine Offenstellung zu bewegen versucht,
- Fig. 12: das Schaltelement aus Figur 11 in der Offenstellung seines Sperrventils,
- Fig. 13: das Schaltelement aus den Figuren 11 und 12 in einem gegenüber Figur 12 um 90° gedrehten Längsschnitt,
- Fig. 14: das hier in ein Eckventil integrierte Schaltelement aus den Figuren 11 bis 13 mit dem hier in der Schließstellung befindlichen Handbrausehalter,
- Fig. 15: das mit dem Schaltelement aus den Figuren 11 bis 14 ausgestattete Eckventil mit dem hier in der unbelasteten Offenstellung befindlichen Handbrausehalter, und
- Fig. 16: das Schaltelement aus den Figuren 11 bis 15 in einer auseinandergezogenen Einzelteildarstellung.

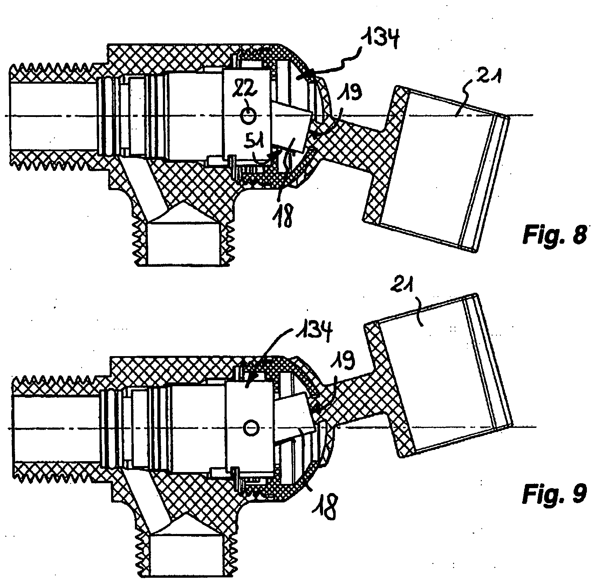

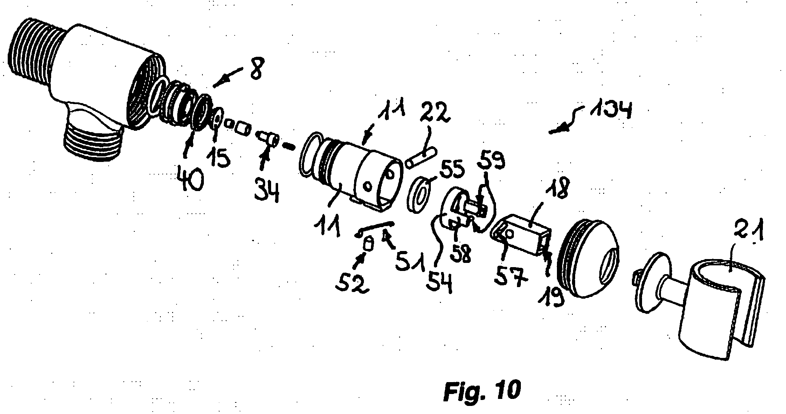

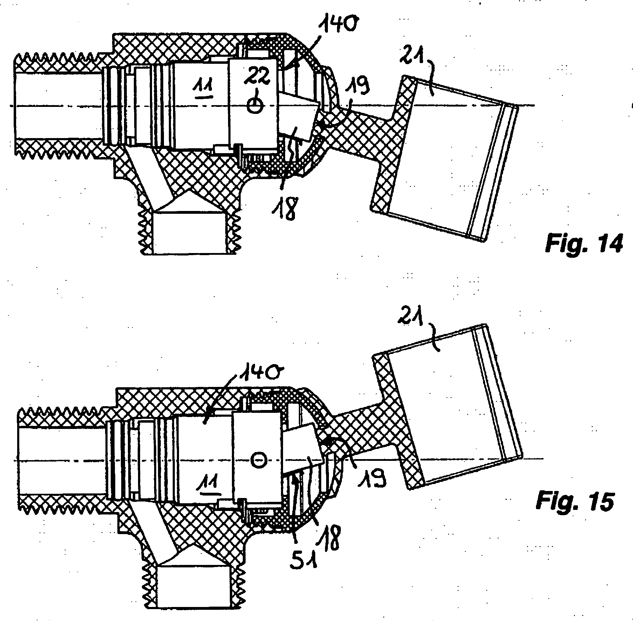

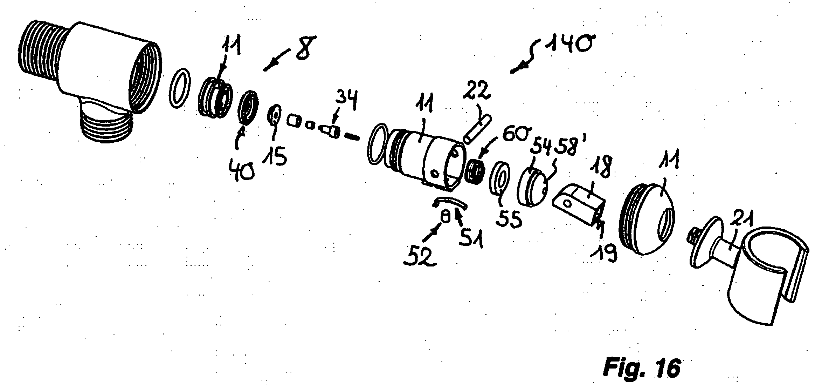

In den Fig. 1, 8, 9, 14 und 15 ist eine Handbrause-Halteeinrichtung mit einem Handbrause-Halter 21 dargestellt, in welchem Handbrause-Halter 21 eine Handbrause 5 abgelegt werden kann. Die in den Fig. 1, 2, 8, 9, 14 und 15 gezeigte Handbrause-Halteeinrichtung weist ein Schaltelement auf, das in den Fig. 1 bis 16 anhand verschiedener Ausführungsbeispiele 1, 134 und 140 näher dargestellt ist. Das Schaltelement 1, 134 und 140 weist einen zur Betätigung des Schaltelementes bestimmten Betätigungsarm 18 auf, der an einem ersten Armende 19 den Handbrause-Halter 21 trägt. Dieser Betätigungsarm 18 ist unter der Last der im Handbrausehalter 21 abgelegten Handbrause 5 in eine erste Betätigungsstellung verschwenkbar.

Das Schaltelement, das auch als elektrisches Schaltelement ausgebildet sein kann, ist hier als mechanisches Schaltelement ausgestaltet, das von einer in den Fig. 2, 6, 7, 9, 12, 13 und 15 gezeigten ersten Betätigungsstellung gegen eine Rückstellkraft in die in den Fig. 1, 5, 8, 11 und 14 dargestellte zweite Betätigungsstellung verschwenkbar ist. In der ersten und somit oberen Schwenkposition gibt das Schaltelement 1, 134, 140 den Durchfluss zur Handbrause 5 frei.

Das Schaltelement 1, 134 und 140 weist ein Sperrventil 8 auf, das einem Flüssigkeitsauslass 9 vorgeschaltet ist, der über eine flexible Schlauchleitung 10 zu der Handbrause 5 führt. Das Sperrventil 8 ist in einem Ventilgehäuse 11 vorgesehen. Das Sperrventil 8 hat eine Durchflussöffnung 13, die einen Ventilsitz 14 umgrenzt.

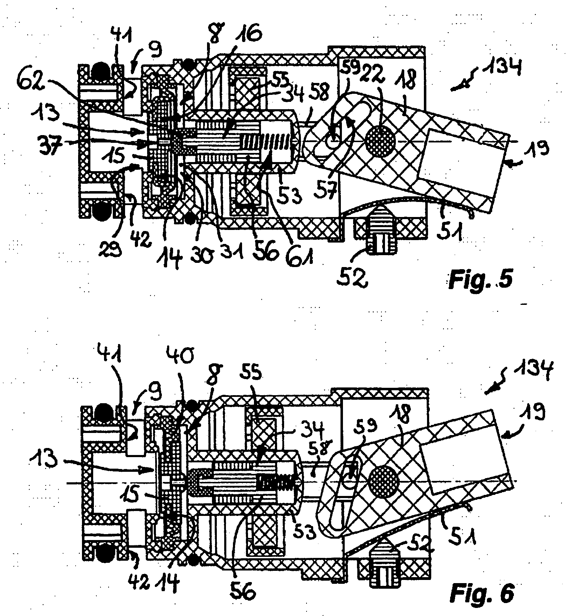

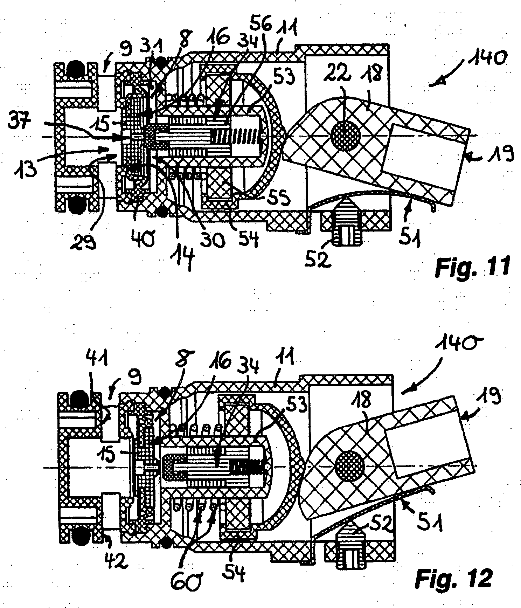

Wie in den Figuren 5 und 11 deutlich wird, ist der Ventilsitz 14 in einer Schließstellung des Sperrventils 8 von einem Ventilverschluss 15 verschlossen. Dieser Ventilverschluss 15 weist einen, den Ventilsitz 14 in Schließstellung beaufschlagenden Ventilteller 16 auf.

Zur Betätigung des Sperrventils 8 ist der Betätigungsarm 18 vorgesehen, der an seinem ersten Armende 19 ein Gewinde 20 trägt, an dem ein Gegengewinde des hier gabelförmigen Handbrausehalters 21 montiert werden kann. Der Betätigungsarm 18 ist um eine mit Abstand von den Armenden vorgesehene und vorzugsweise etwa mittig angeordnete Schwenkachse 22 derart verschwenkbar gelagert, dass der Betätigungsarm 18 unter der Last der im Handbrausehalter 21 abgelegten Handbrause 5 gegen eine Rückstellkraft verschwenkbar ist.

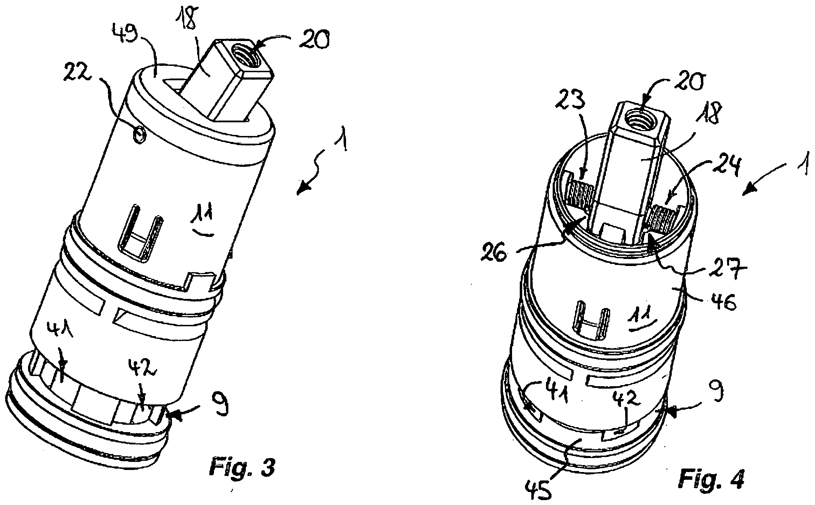

Die Rückstellkraft kann beispielsweise durch die in Figur 4 erkennbaren und hier beidseits des Betätigungsarmes 18 auf der Schwenkachse 22 angeordneten Schenkelfedern 23, 24 aufgebracht werden. Dabei ist der Angriff der Schenkelfedern 23, 24 am Betätigungsarm 18 derart veränderbar, dass die Rückstellkraft beispielsweise an das Gewicht der Handbrause 5 angepasst werden kann. Der Betätigungsarm 18 weist dazu auf einer Kreisbahn um die Schwenkachse 22 angeordnete Befestigungsöffnungen 25 auf, in die wahlweise das entsprechende und hier abgewinkelte Federende 26, 27 der Schenkelfedern 23, 24 eingreifen kann.

In den Figuren 5, 6, 10, 11, 12 und 16 ist der Betätigungsarm 18 gegen die Rückstellkraft eines als Federzunge 51 ausgebildeten Rückstellelements verschwenkbar. Diese als Rückstellelement dienende Federzunge 51 ist mit ihrem dem Betätigungsarm 18 abgewandten Zungenendbereich am Ventilgehäuse 11 gehalten, während der andere freie Zungenendbereich den Betätigungsarm 18 beaufschlagt. Die Federzunge 51 ist hier auf ihrer dem Betätigungsarm 18 abgewandten Federzungen-Seite von einer Stellschraube 52 beaufschlagt, mittels der die Vorspannung der Federzunge 51 verändert werden kann.

Im Ventilverschluss 15 ist ein erster Flüssigkeitskanal 28, 28' vorgesehen, der die der Durchflussöffnung 13 zugewandte erste Ventilseite 29 mit einer auf der der Durchflussöffnung 13 abgewandten zweiten Ventilseite 30 angeordneten Kammer 31 verbindet. In den Längsschnitten gemäß den Figuren 5 bis 7 und 11 bis 13 ist zu erkennen, dass der Ventilverschluss 15 eine Ventilverschluss-Membrane 40 aus elastischem oder formveränderbarem Material aufweist, welche die erste Ventilseite 29 von der zweiten Ventilseite 30 trennt. Die Ventilverschluss-Membrane 40 ist mit ihrem äußeren Membranumfang am Innenumfang des Ventilgehäuses 11 dicht gehalten. Um die der Durchflussöffnung 13 zugewandte erste Ventilseite 29 mit der auf der der Durchflussöffnung 13 abgewandten zweiten Ventilseite 30 angeordneten Kammer 31 zu verbinden, ist im Ventilverschluss 15 ein erster Flüssigkeitskanal 28, 28' vorgesehen. Dieser Flüssigkeitskanal 28' kann in der Ventilverschluss-Membrane 40 des Ventilverschlusses 15 vorgesehen sein.

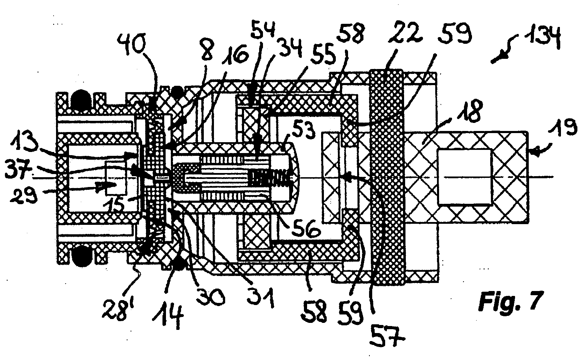

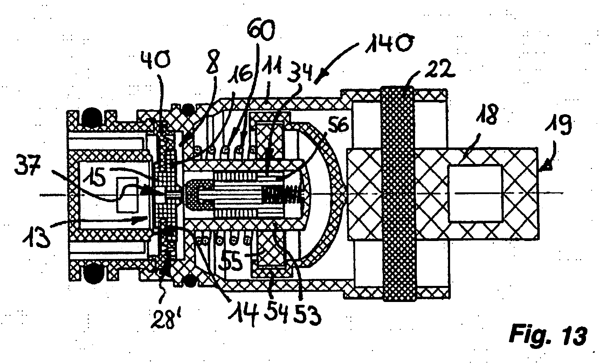

Bei einer demgegenüber anderen Ausführungsform, wie sie in den Figuren 7 und 13 gezeigt ist, ist der Flüssigkeitskanal 28 als zentraler Flüssigkeitskanal ausgebildet, der den Ventilteller 16 durchsetzt. Dieser Flüssigkeitskanal 28 kann in einer Ausführungsform eine an der zuströmseitigen Stirnseite des Ventilzapfens 17 angeordnete Kanalöffnung aufweisen, den Ventilzapfen 17 in Zapfen-Längsrichtung durchsetzen und auf der zweiten Ventilseite 30 in einem zentralen Ventilvorsprung 32, an dem die den Auslass des ersten Flüssigkeitskanals 28 bildende Kanalöffnung 33 seitlich am Ventilvorsprung 32 angeordnet ist, münden.

In den Figuren 5 bis 6 sind zwei Schaltelemente 134, 140 gezeigt, bei denen der Betätigungsschieber 34 in einem Schiebergehäuse 53 verschieblich geführt ist. Der Betätigungsarm 18 und der Betätigungsschieber 34 stehen durch das Schiebergehäuse 53 hindurch magnetisch gekoppelt miteinander in Steuerverbindung. Dazu wird das Schiebergehäuse 53 außenumfangsseitig von zumindest einem Haltering 54 umgriffen, wobei am Haltering 54 oder am Betätigungsschieber 34 wenigstens ein Dauermagnet 55 vorgesehen ist, der mit einem ferromagnetischen Gegenstück 56 am jeweils anderen Bauteil 34, 54 zusammenwirkt. Auf diese Weise ist eine Schwenkbewegung am Betätigungsarm 18 in eine Schiebebewegung des in dem Schiebergehäuse 53 verschieblich geführten Betätigungsschiebers 34 umsetzbar.

Das Schaltelement 134 weist einen Betätigungsarm 18 auf, der an seinem dem Handbrausehalter 21 abgewandten Armende eine als Kulissenführung dienende Führungsnut 57 aufweist. An den Haltering 54 ist ein Halteringbügel 58 angeformt, der mit einem als Gleitstein dienenden angeformten Führungssteg 59 in die Führungsnut 57 eingreift. Die zwischen dem Betätigungsarm 18 und dem Haltering 54 vorgesehene Kulissenführung setzt somit eine Schwenkbewegung am Betätigungsarm 18 in eine Schiebebewegung des Halterings 54 und des mit ihm magnetisch gekoppelt in Steuerverbindung stehenden Betätigungsschiebers 34 um.

In den Figuren 5 bis 7 ist erkennbar, dass der Betätigungsschieber 34 mittels der Rückstellkraft wenigstens eines hier als Druckfeder ausgebildeten Rückstellelements 61 in die Schließstellung des Ventilverschlusses 15 gedrückt wird, in welcher Schließstellung der Betätigüngsschieber 34 die abströmseitige Kanalöffnung des ersten Flüssigkeitskanals 28 abdichtet. An dem den ersten Flüssigkeitskanal 28 zugewandten Schieberende des Betätigungsschiebers 34 ist dazu eine Dichtung 62 aufgesetzt, die hier als eine aus elastischem Material hergestellte Dichtkappe ausgebildet ist.

Das Schaltelement 140 hat einen Haltering 54 mit einer Haltering-Kappe 58', welche Haltering-Kappe 58' direkt von dem dem Handbrausehalter 21 abgewandten Armende des Betätigungsarmes 18 beaufschlagt wird. Dabei wird der Haltering 54 von einem hier als Druckfeder 60 ausgebildeten Rückstellelement beaufschlagt, welches Rückstellelement 60 das Schiebergehäuse 53 umschließt und sich am Schiebergehäuse 53 abstützt. Das Rückstellelement 60 versucht, den Haltering 54 in der der Offenposition entsprechenden Schiebeposition zu halten. Wird der Betätigungsarm 18 durch das Gewicht einer in den Handbrausehalter 21 eingelegten Handbrause nach unten verschwenkt, drückt der Betätigungsarm 18 die Haltering-Kappe 58' gegen die Rückstellkraft des Rückstellelements 60 in die Schließstellung, wobei die Schiebebewegung des auf dem Schiebergehäuse 53 verschieblich geführten Halterings 54 magnetisch gekoppelt auch auf den Betätigungsschieber 34 übertragen wird.

Die Figuren 5 und 11 zeigen das Sperrventil 8 in geschlossener Stellung. Demgegenüber ist das Sperrventil 8 in den Figuren 6 und 12 in offener Stellung dargestellt.

Um in Schließstellung einen dichten Verschluss des Sperrventils 8 sicherzustellen, ist eine Dichtung vorgesehen, die in Schließstellung des Sperrventils 8 zwischen Ventilverschluss 15 und Ventilsitz 14 angeordnet ist. Dabei kann die elastische Ventilverschluss-Membran 40 als Dichtring dienen, die den Flüssigkeitsauslass 9 von der Kammer 31 in dem zwischen dem Ventilverschluss 15 und dem Ventilgehäuse 11 angeordneten Bereich abtrennt.

Bei den hier dargestellten Ausführungsbeispielen 1, 134 und 140 des Schaltelementes wirkt der Betätigungsschieber 34 in Verbindung mit der zumindest einen Auslassöffnung 37 praktisch als Mehrwegeventil.

Das zum Schaltelement 1, 134 und 140 strömende Wasser kann bei geöffnetem Sperrventil 8 durch die Durchflussöffnung 13 hindurch zum Flüssigkeitsauslass 9 und von dort über die Schlauchleitung zur Handbrause 5 fließen, wo das Wasser durch Betätigen des in der Handbrause 5 vorgesehenen Brauseventils 6 entnehmbar ist. Eine Teilmenge des zur Handbrause-Einheit strömenden Wassers fließt durch den ersten Flüssigkeitskanal 28, 28' hindurch von der ersten Ventilseite 29 des Sperrventils 8 zu der auf der zweiten Ventilseite 30 vorgesehenen Kammer 31. Bei geschlossenem Sperrventil 8 unterbindet der auf dem Ventilsitz 14 dicht aufliegende Ventilverschluss 15 den ersten Teilstrom. Das vom Wasserversorgungsnetz kommende Wasser steht sowohl auf der ersten Ventilseite 29 als auch - über den ersten Flüssigkeitskanal 28, 28' - auf der zweiten Ventilseite 30 mit gleichem Druck an. Da der von der Durchflussöffnung 13 in Schließstellung des Sperrventils 8 umgrenzte Teilbereich der ersten Ventilseite 29 im Vergleich zu der der Kammer 31 zugewandten zweiten Ventilseite 30 kleiner ist, wird der Ventilverschluss 15 so lange dicht auf dem Ventilsitz 14 gehalten, bis der in der Kammer 31 anstehende Druck über die wenigstens eine, mittels dem Betätigungsschieber 34 öffen- und schließbare Auslassöffnung 37 abgebaut wird. Der Ventilverschluss 15 wird somit auch hydraulisch dicht gegen den Ventilsitz 14 gepresst, wenn der Betätigungsschieber 34 die zumindest eine Auslassöffnung 37 verschlossen hat. Da der Ventilverschluss 15 selbst dann dicht auf dem Ventilsitz 14 aufliegt, wenn im Bereich der zur Handbrause 5 führenden Schlauchleitung 10 eine Undichtigkeit auftritt, solange der Betätigungsarm 18 den Schiebeweg des Betätigungsschiebers 34 noch nicht in Richtung zum Betätigungsarm 18 freigegeben hat und der Betätigungsschieber 34 den zum Flüssigkeitsauslass 9 führenden Strömungsweg durch Öffnen der wenigstens einen Auslassöffnung 37 nicht geöffnet hat, wird eine unkontrollierte Leckage im Bereich der zur Handbrause 5 führenden Schlauchleitung 10 wirkungsvoll vermieden.

Der Flüssigkeitsauslass 9 wird durch wenigstens eine und vorzugsweise mindestens zwei Durchflussöffnungen im Ventilgehäuse 11 gebildet, die hier als in Gehäuse-Umfangsrichtung orientierte Durchflussschlitze oder -spalte 41, 42 ausgestaltet und dem Sperrventil 8 in Strömungsrichtung nachgeschaltet sind.

Ist der Ventilverschluss 15 vom Ventilsitz 14 beabstandet, befindet sich auch der Betätigungsschieber 34 in seiner in Richtung zum Betätigungsarm 18 vorgeschobenen Schiebeposition, in welcher der Betätigungsschieber 34 die wenigstens eine zum Flüssigkeitsauslass 9 führende Auslassöffnung 37 freigibt. Das über den ersten Flüssigkeitskanal 28, 28' in die Kammer 31 einströmende Wasser kann somit über die wenigstens eine Auslassöffnung 37 ebenfalls zum Flüssigkeitsauslass 9 fließen, wo die Teilströme zusammengeführt werden.

Ist das Sperrventil 8 geschlossen und liegt der Ventilverschluss 15 dicht am Ventilsitz 14 an, kann das zum Schaltelement 1, 134 und 140 der Handbrause-Halteeinrichtung strömende Wasser nur durch den ersten Flüssigkeitskanal 28, 28' in die Kammer 31 einfließen. Ist im Handbrausehalter 21 eine Handbrause 5 abgelegt und befindet sich der Betätigungsarm 18 in seiner, in den Figuren 5, 6, 8, 11 und 14 gezeigten unteren Schwenkposition, wird der Betätigungsschieber 34 derart in die dem Betätigungsarm 18 abgewandte Richtung zurückgeschoben, dass der Betätigungsschieber 34 die wenigstens eine, von der Kammer 31 zum Flüssigkeitskanal 9 führende Auslassöffnung 37 verschließt.

Die hier in verschiedenen Ausführungsbeispielen gezeigte Handbrause-Halteeinrichtung zeichnet sich durch eine hohe Betriebssicherheit aus, wobei insbesondere durch Undichtigkeiten im Bereich der Schlauchleitung verursachte Schäden wirkungsvoll unterbunden werden.

Aus den Fig. 1 bis 16 ist erkennbar, dass das Schaltelement 1, 134 und 140 als eine Einsetzpatrone ausgestaltet ist, die in ein Gehäuse 50 der Handbrause-Halteeinrichtung einsetzbar ist. Aus den Fig. 1 und 2 ist erkennbar, dass an der Handbrause 5 ein Entnahme- oder Brauseventil 6 vorgesehen sein kann.

### Bezugszeichenliste

- 1: Schaltelement (gemäß den Figuren 1 bis 4)
- 5: Handbrause
- 6: Brauseventil
- 7: Betätigungselement (des Brauseventils 6)
- 8: Sperrventil
- 9: Flüssigkeitsauslass
- 10: Schlauchleitung
- 11: Ventilgehäuse
- 12: Patronenaufnahme
- 13: Durchflussöffnung
- 14: Ventilsitz
- 15: Ventilverschluss
- 16: Ventilteller
- 17: Ventilzapfen (des Ventilverschlusses 15)
- 18: Betätigungsarm
- 19: Armende (des Betätigungsarmes 18)
- 20: Gewinde
- 21: Handbrausehalter
- 22: Schwenkachse (des Betätigungsarmes 18)
- 23: Schenkelfeder
- 24: Schenkelfeder
- 25: Befestigungsöffnungen
- 26: Federende (der Schenkelfeder 23)
- 27: Federende (der Schenkelfeder 24)
- 28: erster Flüssigkeitskanal
- 29: erste Ventilseite
- 30: zweite Ventilseite
- 31: Kammer
- 32: Ventilvorsprung
- 33: Kanalöffnung (im Ventilvorsprung 32)
- 34: Betätigungsschieber
- 35: abgerundetes Schieberende
- 36: Schaltnocke
- 37: Auslassöffnung
- 38: Kammerwand
- 39: Verbindungszapfen
- 40: Ventilverschluss-Membrane
- 41: Durchflussspalte
- 42: Durchflussspalte
- 43: zweiter Flüssigkeitskanal
- 44: Einlassöffnung (des zweiten Flüssigkeitskanales 43)
- 45: Gehäuseteil
- 46: Gehäuseteil
- 47: Schieberteil (des Betätigungsschiebers 34)
- 48: Schieberteil (des Betätigungsschiebers 34)
- 49: Deckel
- 50: Gehäuse
- 51: Federzunge
- 52: Stellschraube
- 53: Schiebergehäuse
- 54: Haltering
- 55: Dauermagnet
- 56: Gegenstück
- 57: Führungsnut
- 58: Haltering-Bügel (58) oder Haltring-Kappe (58')
- 59: Führungssteg
- 60: Rückstellelement
- 61: Rückstellelement
- 134: Schaltelement (gemäß den Figuren 5 bis 10)
- 140: Schaltelement (gemäß den Figuren 11 bis 16)

## Patentansprüche

1. Handbrause-Halteeinrichtung, die ein Schaltelement (1, 134, 140) mit einem Betätigungsarm (18) hat, der an einem ersten Armende (19) einen Handbrausehalter (21) trägt, und mit einer Handbrause (5), die im Handbrausehalter (21) ablegbar ist, wobei der Handbrausehalter (21) unter der Last der in ihm abgelegten Handbrause (5) von einer ersten Betätigungsstellung in eine zweite Betätigungsstellung verschwenkbar ist, wobei das Schaltelement (1, 134, 140) ein Sperrventil (8) hat, welches einem, zu der Handbrause (5) führenden Flüssigkeitsauslass (9) der Handbrause-Halteeinrichtung in Strömungsrichtung vorgeschaltet ist und eine Durchflussöffnung (13) aufweist, welche einen Ventilsitz (14) umgrenzt, der in einer Schließstellung des Sperrventils (8) von einem Ventilverschluss (15) verschlossen ist, und wobei der Betätigungsarm (18) zur Betätigung des Sperrventiles (8) vorgesehen ist, **dadurch gekennzeichnet, dass** im Ventilverschluss (15) des Sperrventiles (8) ein erster Flüssigkeitskanal (28, 28') vorgesehen ist, der die der Durchflussöffnung (13) zugewandte erste Ventilseite (29) mit einer auf der der Durchflussöffnung (13) abgewandten zweiten Ventilseite (30) angeordneten Kammer (31) verbindet, dass im Schaltelement (1, 2, 3, 4, 118, 122, 126, 130, 134, 140) ein Betätigungsschieber (34) vorgesehen ist, der in einem Schiebergehäuse (53) in Schieber-Längsrichtung verschieblich geführt ist, und der in einer in Richtung zum Betätigungsarm (18) vorgeschobenen Schiebeposition des Betätigungsschiebers (34) wenigstens eine Auslassöffnung (37) freigibt, welche die Kammer (31) mit dem Flüssigkeitsauslass (9) verbindet, dass der Betätigungsarm (18) und der Betätigungsschieber (34) durch das Schiebergehäuse (53) hindurch magnetisch gekoppelt miteinander in Steuerverbindung stehen, und dass der vom Ventilsitz (14) in Schließstellung des Sperrventiles (8) umgrenzte Teilbereich der ersten Ventilseite (29) im Vergleich zu der der Kammer (31) zugewandten zweiten Ventilseite (30) kleiner ist.

2. Handbrause-Halteeinrichtung nach Anspruch 1, **dadurch gekennzeichnet, dass** das Schaltelement (1, 2, 3, 4, 118, 122, 126, 130, 134, 140) ein elektrisches, magnetisches, mechanisches oder hydraulisches Schaltelement oder eine Kombination hiervon ist.

3. Handbrause-Halteeinrichtung nach Anspruch 1 oder 2, **dadurch gekennzeichnet, dass** das Schaltelement (1, 134, 140) in der ersten Betätigungsstellung des Betätigungsarmes (18) den Durchfluss des Wassers zur Handbrause (5) freigibt.

4. Handbrause-Halteeinrichtung nach einem der Ansprüche 1 bis 3, **dadurch gekennzeichnet, dass** der Betätigungsschieber (34) mit seinem dem Betätigungsarm (18) zugewandten Schieber-Ende an einer am zweiten Ende des Betätigungsarmes (18) vorgesehenen Schaltnocke (36) in Steuerdverbindung anliegt.

5. Handbrause-Halteeinrichtung nach einem der Ansprüche 1 bis 4, **dadurch gekennzeichnet, dass** das Schiebergehäuse (53) außenumfangsseitig von zumindest einem Haltering (54) umgriffen ist, dass am Haltering (54) oder am Betätigungsschieber (34) wenigstens ein Dauermagnet (55) vorgesehen ist, der mit einem ferromagnetischen Gegenstück (56) am jeweils anderen Bauteil (34, 54) zusammenwirkt, und dass eine Schwenkbewegung am Betätigungsarm (18) in eine Schiebebewegung des auf dem Schiebergehäuse (53) verschieblich geführten Halteringes umsetzbar ist.

6. Handbrause-Halteeinrichtung nach einem der Ansprüche 1 bis 5, **dadurch gekennzeichnet, dass** eine Dichtung vorgesehen ist, die in Schließstellung des Sperrventiles (8) zwischen Ventilverschluss (15) und Ventilsitz (14) angeordnet ist.

7. Handbrause-Halteeinrichtung nach Anspruch 6, **dadurch gekennzeichnet, dass** die Dichtung aus elastischem Material hergestellt ist.

8. Handbrause-Halteeinrichtung nach einem der Ansprüche 1 bis 7, **dadurch gekennzeichnet, dass** der Ventilverschluss (15) eine Ventilverschluss-Membrane (40) aufweist, die die erste Ventilseite (29) von der zweiten Ventilseite (30) trennt.

9. Handbrause-Halteeinrichtung nach Anspruch 8, **dadurch gekennzeichnet, dass** die Ventilverschluss-Membrane (40) mit ihrem äußeren Membranumfang am Innenumfang eines Ventilgehäuses (11) dicht gehalten ist.

10. Handbrause-Halteeinrichtung nach Anspruch 8 oder 9, **dadurch gekennzeichnet, dass** der im Ventilverschluss (15) vorgesehene erste Flüssigkeitskanal als zentraler Flüssigkeitskanal (28, 28') ausgebildet oder in der Ventilverschluss-Membrane (40) des Ventilverschlusses (15) vorgesehen ist.

11. Handbrause-Halteeinrichtung nach einem der Ansprüche 1 bis 10, **dadurch gekennzeichnet, dass** die Handbrause-Halteeinrichtung wenigstens ein Rückstellelement aufweist und dass der Betätigungsschieber (34) von einer zum Betätigungsarm (18) vorgeschobenen Schiebeposition gegen die Rückstellkraft des wenigstens einen Rückstellelements in eine in die dem Betätigungsarm (18) abgewandte Richtung zurückgeschobene Schiebeposition verschieblich geführt ist.

12. Handbrause-Halteeinrichtung nach Anspruch 10 oder 11, **dadurch gekennzeichnet, dass** der Betätigungsschieber (34) stangenförmig ausgestaltet ist und an der der Kammer (31) zugewandten Stirnseite die wenigstens eine Einlassöffnung (44) hat und dass am Betätigungsschieber (34) umfangsseitig die zumindest eine Auslassöffnung (37) vorgesehen ist.

13. Handbrause-Halteeinrichtung nach einem der Ansprüche 10 bis 12, **dadurch gekennzeichnet, dass** der Betätigungsschieber (34) zumindest zweiteilig ausgebildet ist und zwei getrennt voneinander verschieblich geführte Schieberteile (47, 48) hat, dass das der Kammer (31) zugewandte erste Schieberteil (47) stirnseitig die wenigstens eine Einlassöffnung (44) des das erste Schieberteil (47) durchsetzenden zweiten Flüssigkeitskanals (44) aufweist, dass das der Kammer (31) abgewandte zweite Schieberteil (48) mit seiner dem ersten Schieberteil (47) zugewandten Stirnseite in Schließstellung des Sperrventils (8) den zweiten Flüssigkeitskanal (44) dicht verschließt und dass in einer in Richtung zum Betätigungsarm (18) vorgeschobenen Schiebeposition des zweiten Schieberteils (48) des Betätigungsschiebers (34) die Schieberteile (47, 48) unter Bildung eines als Auslassöffnung (37) vorgesehenen Spaltes voneinander beabstandet sind.

14. Handbrause-Halteeinrichtung nach einem der Ansprüche 1 bis 13, **dadurch gekennzeichnet, dass** der Betätigungsarm (18) gegen die Rückstellkraft des zumindest eines Rückstellelements in die zweite Betätigungsstellung verschwenkbar ist.

15. Handbrause-Halteeinrichtung nach Anspruch 14, **dadurch gekennzeichnet, dass** das wenigstens eine Rückstellelement als Federzunge (51) ausgebildet ist, welche Federzunge (51) mit einem freien Zungenendbereich den Betätigungsarm beaufschlagt.

16. Handbrause-Halteeinrichtung nach Anspruch 15, **dadurch gekennzeichnet, dass** die Federzunge (51) auf ihrer dem Betätigungsarm (18) abgewandten Federzungen-Seite von einer Stellschraube (52) beaufschlagt ist, und dass mittels der Stellschraube (52) die Vorspannung der Federzunge (51) veränderbar ist.

17. Handbrause-Halteeinrichtung nach Anspruch 14, **dadurch gekennzeichnet, dass** das zumindest eine Rückstellelement als Schenkelfeder (23, 24) oder dergleichen Federelement ausgestaltet ist.

18. Handbrause-Halteeinrichtung nach Anspruch 17, **dadurch gekennzeichnet, dass** das zumindest eine Federelement (23, 24) mit einer Vorspannung auf den Betätigungsarm (18) einwirkt und dass die auf den Betätigungsarm (18) einwirkende Vorspannung des zumindest einen Federelementes (23, 24) vorzugsweise veränderbar ist.

19. Handbrause-Halteeinrichtung nach Anspruch 17 oder 18, **dadurch gekennzeichnet, dass** am Betätigungsarm (18) seitlich mehrere, auf einer Kreisbahn um die Schwenkachse angeordnete Angriffsstellen (25) vorgesehen sind, an denen das zumindest eine Federelement (23, 24) wahlweise angreift.

20. Handbrause-Halteeinrichtung nach einem der Ansprüche 1 bis 19, **dadurch gekennzeichnet, dass** das Schaltelement (1, 2, 3, 4, 118, 122, 126, 130, 134, 140) als eine Einsetzpatrone ausgestaltet ist, die in ein Gehäuse der Handbrause-Halteeinrichtung einsetzbar ist.

21. Handbrause-Halteeinrichtung nach einem der Ansprüche 1 bis 20, **dadurch gekennzeichnet, dass** an der Handbrause (5) ein Entnahme-oder Brauseventil (6) vorgesehen ist.

## Claims

1. Hand-held shower holding device which has a switch element (1, 134, 140) with an actuation arm (18) which, on a first arm end (19), supports a hand-held shower holder (21), and having a hand-held shower (5) which can be placed in the hand-held shower holder (21), wherein the hand-held shower holder (21) can be pivoted, under the load of the hand-held shower (5) placed therein, from a first actuation position to a second actuation position, wherein the switch element (1, 134, 140) has a check valve (8) which in the flow direction is connected upstream of a fluid outlet (9) of the hand-held shower holding device leading to the hand-held shower (5) and has a through-flow opening (13) which delimits a valve seat (14) which, in a closed position of the check valve (8), is closed by a valve closure (15), and wherein the actuation arm (18) is provided for actuating the check valve (8), **characterised in that** in the valve closure (15) of the check valve (8) a first fluid duct (28, 28') is provided which connects the first valve side (29) facing the through-flow opening (13) to a chamber (31) arranged on the second valve side (30) facing away from the through-flow opening (13), **in that** in the switch element (1, 2, 3, 4, 118, 122, 126, 130, 134, 140) an actuation slide (34) is provided which is guided in a slide housing (53) so as to be displaceable in the slide longitudinal direction and which in a sliding position of the actuation slide (34), which is advanced in the direction towards the actuation arm (18), uncovers at least one outlet opening (37) which connects the chamber (31) to the fluid outlet (9), **in that** the actuation arm (18) and the actuation slide (34) are magnetically coupled in a controlling connection with one another through the slide housing (53), and **in that** the sub-region of the first valve side (29) which, in the closed position of the check valve (8), is delimited by the valve seat (14) is smaller in comparison with the second valve side (30) facing the chamber (31).

2. Hand-held shower holding device as claimed in claim 1, **characterised in that** the switch element (1, 2, 3, 4, 118, 122, 126, 130, 134, 140) is an electric, magnetic, mechanical, or hydraulic switch element or a combination thereof.

3. Hand-held shower holding device as claimed in claim 1 or 2, **characterised in that** the switch element (1, 134, 140) in the first actuation position of the actuation arm (18) allows the through-flow of the water to the hand-held shower (5).

4. Hand-held shower holding device as claimed in any one of claims 1 to 3, **characterised in that** the actuation slide (34) lies with its slide end, which faces the actuation arm (18), in a controlling connection against a switching cam (36) provided on the second end of the actuation arm (18).

5. Hand-held shower holding device as claimed in any one of claims 1 to 4, **characterised in that** the slide housing (53) on the outer circumferential side is encompassed by at least one retaining ring (54), **in that** at least one permanent magnet (55) which interacts with a ferromagnetic counterpart (56) on the respective other component (34, 54) is provided on the retaining ring (54) or on the actuation slide (34), and **in that** a pivoting movement on the actuation arm (18) can be converted into a sliding movement of the retaining ring which is displaceably guided on the slide housing (53).

6. Hand-held shower holding device as claimed in any one of claims 1 to 5, **characterised in that** a seal is provided which, in the closed position of the check valve (8), is arranged between the valve closure (15) and the valve seat (14).

7. Hand-held shower holding device as claimed in claim 6, **characterised in that** the seal is produced from an elastic material.

8. Hand-held shower holding device as claimed in any one of claims 1 to 7, **characterised in that** the valve closure (15) has a valve-closure membrane (40) which separates the first valve side (29) from the second valve side (30).

9. Hand-held shower holding device as claimed in claim 8, **characterised in that** the valve-closure membrane (40) is tightly held with its outer membrane circumference on the inner circumference of a valve housing (11).

10. Hand-held shower holding device as claimed in claim 8 or 9, **characterised in that** the first fluid duct which is provided in the valve closure (15) is formed as a central fluid duct (28, 28') or is provided in the valve closure membrane (40) of the valve closure (15).

11. Hand-held shower holding device as claimed in any one of claims 1 to 10, **characterised in that** the hand-held shower holding device comprises at least one restoring element and **in that** the actuation slide (34) is displaceably guided from a sliding position, which is advanced towards the actuation arm (18) against the restoring force of the at least one restoring element, to a sliding position which is pushed back in the direction facing away from the actuation arm (18).

12. Hand-held shower holding device as claimed in claim 10 or 11, **characterised in that** the actuation slide (34) is designed in a rod-shaped manner and, on the end face facing the chamber (31), has the at least one inlet opening (44), and **in that** the at least one outlet opening (37) is provided on the circumferential side on the actuation slide (34).

13. Hand-held shower holding device as claimed in any one of claims 10 to 12, **characterised in that** the actuation slide (34) is at least bipartite and has two slide parts (47, 48) which are guided so as to be displaceable separately from one another, **in that** the first slide part (47) facing the chamber (31) has, on the end face, the at least one inlet opening (44) of the second fluid duct (44) which passes through the first slide part (47), **in that** the second slide part (48) facing away from the chamber (31) by means of its end side facing the first slide part (47) in the closed position of the check valve (8) tightly closes the second fluid duct (44), and **in that** in a sliding position of the second slide part (48) of the actuation slide (34), which is advanced in the direction towards the actuation arm (18), the slide parts (47, 48) are spaced apart from one another forming a gap which is provided as an outlet opening (37).

14. Hand-held shower holding device as claimed in any one of claims 1 to 13, **characterised in that** the actuation arm (18) can be pivoted to the second actuation position against the restoring force of the at least one restoring element.

15. Hand-held shower holding device as claimed in claim 14, **characterised in that** the at least one restoring element is formed as a flexible tongue (51), which flexible tongue (51) acts upon the actuation arm by means of a free tongue end region.

16. Hand-held shower holding device as claimed in claim 15, **characterised in that** the flexible tongue (51), on its flexible-tongue side facing away from the actuation arm (18), is acted upon by a set screw (52), and **in that** the pretensioning of the flexible tongue (51) can be modified by means of the set screw (52).

17. Hand-held shower holding device as claimed in claim 14, **characterised in that** the at least one restoring element is designed as a leg spring (23, 24) or similar spring element.

18. Hand-held shower holding device as claimed in claim 17, **characterised in that** the at least one spring element (23, 24) acts with pretensioning upon the actuation arm (18), and **in that** the pretensioning of the at least one spring element (23, 24) which acts upon the actuation arm (18) can preferably be modified.

19. Hand-held shower holding device as claimed in claim 17 or 18, **characterised in that** a plurality of engagement points (25) are provided laterally on the actuation arm (18), being arranged on a circular path about the pivot axis, the at least one spring element (23, 24) selectively engaging said engagement points (25).

20. Hand-held shower holding device as claimed in any one of claims 1 to 19, **characterised in that** the switch element (1, 2, 3, 4, 118, 122, 126, 130, 134, 140) is designed as an insert cartridge which can be inserted into a housing of the hand-held shower holding device.

21. Hand-held shower holding device as claimed in any one of claims 1 to 20, **characterised in that** a bleeder valve or shower valve (6) is provided on the hand-held shower (5).

## Revendications

1. Dispositif de support de douchette, qui comporte un élément de commutation (1, 134, 140) avec un bras d'actionnement (18), qui porte à une première extrémité (19) du bras un porte-douchette (21), et avec une douchette (5), qui peut être déposée dans le porte-douchette (21), dans lequel le porte-douchette (21) peut, sous la charge de la douchette (5) déposée dans celui-ci, pivoter d'une première position d'actionnement à une deuxième position d'actionnement, dans lequel l'élément de commutation (1, 134, 140) comporte une soupape d'arrêt (8), qui est placée dans la direction d'écoulement en amont d'une sortie de liquide (9) du dispositif de support de douchette conduisant à la douchette (5) et présente une ouverture d'écoulement (13), qui entoure un siège de soupape (14), qui dans une position de fermeture de la soupape d'arrêt (8) est fermé par un obturateur (15), et dans lequel le bras d'actionnement (18) est prévu pour l'actionnement de la soupape d'arrêt (8), **caractérisé en ce qu'**il est prévu dans l'obturateur (15) de la soupape d'arrêt (8) un premier canal de liquide (28, 28'), qui relie le premier côté de soupape (29) tourné vers l'ouverture d'écoulement (13) à une chambre (31) disposée sur le deuxième côté de soupape (30) détourné de l'ouverture d'écoulement (13), **en ce qu'**il est prévu dans l'élément de commutation (1, 2, 3, 4, 118, 122, 126, 130, 134, 140) un coulisseau d'actionnement (34), qui est guidé dans un boîtier de coulisseau (53) de façon mobile dans la direction longitudinale du coulisseau, et qui libère, dans une position de glissement avancée du coulisseau d'actionnement (34) en direction du bras d'actionnement (18), au moins une ouverture de sortie (37), qui relie la chambre (31) à la sortie de liquide (9), **en ce que** le bras d'actionnement (18) et le coulisseau d'actionnement (34) se trouvent en liaison de commande l'un avec l'autre par couplage magnétique à travers le boîtier de coulisseau (53), et **en ce que** la région partielle du premier côté de soupape (29) entourée par le siège de soupape (14) dans la position de fermeture de la soupape d'arrêt (8) est plus petite par comparaison avec le deuxième côté de soupape (30) tourné vers la chambre (31).

2. Dispositif de support de douchette selon la revendication 1, **caractérisé en ce que** l'élément de commutation (1, 2, 3, 4, 118, 122, 126, 130, 134, 140) est un élément de commutation électrique, magnétique, mécanique ou hydraulique ou une combinaison de ceux-ci.

3. Dispositif de support de douchette selon la revendication 1 ou 2, **caractérisé en ce que** l'élément de commutation (1, 134, 140) libère l'écoulement de l'eau vers la douchette (5) dans la première position d'actionnement du bras d'actionnement (18).

4. Dispositif de support de douchette selon l'une quelconque des revendications 1 à 3, **caractérisé en ce que** le coulisseau d'actionnement (34) est en liaison de commande par son extrémité de coulisseau tournée vers le bras d'actionnement (18) avec une came de commutation (36) prévue à la deuxième extrémité du bras d'actionnement (18).

5. Dispositif de support de douchette selon l'une quelconque des revendications 1 à 4, **caractérisé en ce que** le boîtier de coulisseau (53) est entouré en périphérie extérieure par au moins une bague de maintien (54), **en ce qu'**il est prévu sur la bague de maintien (54) ou sur le coulisseau d'actionnement (34) au moins un aimant permanent (55), qui coopère avec une pièce opposée ferromagnétique (56) respectivement sur l'autre composant (34, 54), et **en ce qu'**un mouvement de pivotement au bras d'actionnement (18) peut être converti en un mouvement de glissement de la bague de maintien guidée de façon glissante sur le boîtier de coulisseau (53).

6. Dispositif de support de douchette selon l'une quelconque des revendications 1 à 5, **caractérisé en ce qu'**il est prévu un joint d'étanchéité, qui est placé en position de fermeture de la soupape d'arrêt (8) entre l'obturateur (15) et le siège de soupape (14).

7. Dispositif de support de douchette selon la revendication 6, **caractérisé en ce que** le joint d'étanchéité est fabriqué en un matériau élastique.

8. Dispositif de support de douchette selon l'une quelconque des revendications 1 à 7, **caractérisé en ce que** l'obturateur (15) présente une membrane d'obturateur (40), qui sépare le premier côté de soupape (29) du deuxième côté de soupape (30).

9. Dispositif de support de douchette selon la revendication 8, **caractérisé en ce que** la membrane d'obturateur (40) est maintenue de façon étanche avec son pourtour extérieur de membrane sur le pourtour intérieur d'un corps de soupape (11).

10. Dispositif de support de douchette selon la revendication 8 ou 9, **caractérisé en ce que** le premier canal de liquide prévu dans l'obturateur (15) est réalisé sous forme de canal de liquide central (28, 28') ou est prévu dans la membrane d'obturateur (40) de l'obturateur (15).

11. Dispositif de support de douchette selon l'une quelconque des revendications 1 à 10, **caractérisé en ce que** le dispositif de support de douchette présente au moins un élément de rappel et **en ce que** le coulisseau d'actionnement (34) est guidé de façon glissante d'une position de glissement avancée vers le bras d'actionnement (18) contre la force de rappel dudit au moins un élément de rappel à une position de glissement rétractée dans la direction opposée au bras d'actionnement (18).

12. Dispositif de support de douchette selon la revendication 10 ou 11, **caractérisé en ce que** le coulisseau d'actionnement (34) est réalisé en forme de barre et présente ladite au moins une ouverture d'entrée (44) sur le côté frontal tourné vers la chambre (31) et **en ce que** ladite au moins une ouverture de sortie (37) est prévue en périphérie sur le coulisseau d'actionnement (34).

13. Dispositif de support de douchette selon l'une quelconque des revendications 10 à 12, **caractérisé en ce que** le coulisseau d'actionnement (34) est réalisé au moins en deux parties et comprend deux parties de coulisseau (47, 48) guidées de façon coulissante séparément l'une de l'autre, **en ce que** la première partie de coulisseau (47) tournée vers la chambre (31) présente du côté frontal ladite au moins une ouverture d'entrée (44) du deuxième canal de liquide (44) traversant la première partie de coulisseau (47), **en ce que** la deuxième partie de coulisseau (48) détournée de la chambre (31) ferme de façon étanche, avec son côté frontal tourné vers la première partie de coulisseau (47), dans la position de fermeture de la soupape d'arrêt (8), le deuxième canal de liquide (44), et **en ce que**, dans une position de glissement de la deuxième partie de coulisseau (48) du coulisseau d'actionnement (34) avancée en direction du bras d'actionnement (18), les parties de coulisseau (47, 48) sont espacées l'une de l'autre en formant une fente prévue comme ouverture de sortie (37).

14. Dispositif de support de douchette selon l'une quelconque des revendications 1 à 13, **caractérisé en ce que** le bras d'actionnement (18) peut pivoter dans la deuxième position d'actionnement contre la force de rappel dudit au moins un élément de rappel.

15. Dispositif de support de douchette selon la revendication 14, **caractérisé en ce que** ledit au moins un élément de rappel est réalisé en forme de lamelle élastique (51), lamelle élastique (51) qui agit sur le bras d'actionnement avec une région d'extrémité libre de la lamelle.

16. Dispositif de support de douchette selon la revendication 15, **caractérisé en ce que** la lamelle élastique (51) est soumise à une vis de réglage (52) sur son côté de lamelle élastique détourné du bras d'actionnement (18), et **en ce que** la précontrainte de la lamelle élastique (51) peut être modifiée au moyen de la vis de réglage (52).

17. Dispositif de support de douchette selon la revendication 14, **caractérisé en ce que** ledit au moins un élément de rappel est constitué par un ressort spiral (23, 24) ou un élément élastique analogue.

18. Dispositif de support de douchette selon la revendication 17, **caractérisé en ce que** ledit au moins un élément élastique (23, 24) agit avec une précontrainte sur le bras d'actionnement (18) et **en ce que** la précontrainte dudit au moins un élément élastique (23, 24) agissant sur le bras d'actionnement (18) est de préférence modifiable.

19. Dispositif de support de douchette selon la revendication 17 ou 18, **caractérisé en ce qu'**il est prévu latéralement sur le bras d'actionnement (18) plusieurs points d'application (25) disposés sur un cercle autour de l'axe de pivotement, sur lesquels ledit au moins un élément élastique (23, 24) est appliqué au choix.

20. Dispositif de support de douchette selon l'une quelconque des revendications 1 à 19, **caractérisé en ce que** l'élément de commutation (1, 2, 3, 4, 118, 122, 126, 130, 134, 140) est réalisé en forme de cartouche d'insertion, qui peut être insérée dans un boîtier du dispositif de support de douchette.

21. Dispositif de support de douchette selon l'une quelconque des revendications 1 à 20, **caractérisé en ce qu'**il est prévu sur la douchette (5) une soupape de prélèvement ou de douche (6).
